# EUROPEAN PATENT SPECIFICATION

(11) **EP 2 785 460 B1**
(45) Date of publication and mention of the grant of the patent: **27.01.2021**
(21) Application number: 12798563.8
(22) Date of filing: 29.11.2012
(51) Int. Cl.: B01L 3/00, G01N 35/00

(54) **SYSTEMS AND METHODS FOR SAMPLING OF AMPLIFICATION PRODUCTS**
SYSTEME UND VERFAHREN ZUR PROBENANALYSE VON AMPLIFIKATIONSPRODUKTEN
SYSTÈMES ET PROCÉDURES POUR ANALYSER LES PRODUITS D' AMPLIFICATIONS

(30) Priority: 29.11.2011 US 201113689537; 02.12.2011 US 201161566151 P
(43) Date of publication of application: 08.10.2014
(73) Proprietor: Caliper Life Sciences, Inc., Hopkinton, MA 01748 (US)
(72) Inventor: THORNE, Edward H., IV., North Grafton, Massachusetts 01536 (US); ESTERMAN, Abbie L., Northboro, Massachusetts 01532 (US)
(74) Representative: Mewburn Ellis LLP
(86) International application number: PCT/US2012/067122
(87) International publication number: WO 2013/082316

(56) References cited:
- WO-A1-02/063288
- WO-A1-2011/036289
- WO-A1-2011/090396
- US-A- 6 124 138
- US-A1- 2003 152 994
- US-A1- 2006 062 696
- US-A1- 2010 261 159
- US-A1- 2010 294 811
- GUOLIN XU ET AL: "A self-contained all-in-one cartridge for sample preparation and real-time PCR in rapid influenza diagnosis", LAB ON A CHIP, vol. 10, no. 22, 1 January 2010 (2010-01-01), page 3103, XP055054688, ISSN: 1473-0197, DOI: 10.1039/c005265e
- R. Pal ET AL: "An integrated microfluidic device for influenza and other genetic analyses", Lab on a Chip, vol. 5, no. 10, 1 January 2005 (2005-01-01), page 1024, XP055488509, ISSN: 1473-0197, DOI: 10.1039/b505994a
- Chunsun Zhang ET AL: "PCR microfluidic devices for DNA amplification", BIOTECHNOLOGY ADVANCES., vol. 24, no. 3, 1 May 2006 (2006-05-01), pages 243-284, XP055370153, GB ISSN: 0734-9750, DOI: 10.1016/j.biotechadv.2005.10.002
- Peng Liu ET AL: "Integrated DNA purification, PCR, sample cleanup, and capillary electrophoresis microchip for forensic human identification", Lab on a Chip, vol. 11, no. 6, 1 January 2011 (2011-01-01), page 1041, XP055540029, ISSN: 1473-0197, DOI: 10.1039/c0lc00533a
- GROVER W H ET AL: "Monolithic membrane valves and diaphragm pumps for practical large-scale integration into glass microfluidic devices", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL, vol. 89, no. 3, 1 April 2003 (2003-04-01), pages 315-323, XP004414874, ISSN: 0925-4005, DOI: 10.1016/S0925-4005(02)00468-9

## Description

### TECHNICAL FIELD

The present disclosure is in the field of nucleic acid detection. In particular, herein are methods for sampling of amplification products during an amplification reaction and for analyzing the sampled products.

### BACKGROUND OF THE INVENTION

Detection of nucleic acids is central to gene expression analysis, diagnostics, medicine, forensics, industrial processing, crop and animal breeding, and many other fields. For example, nucleic acid detection technology is used to diagnose disease conditions, detect infectious organisms, determine genetic lineage and genetic markers, correctly identify individuals at crime scenes, and propagate industrial organisms.

The introduction of nucleic acid amplification methods has greatly improved the specificity and sensitivity of nucleic acid detection. One of the most commonly used methods of nucleic acid amplification is polymerase chain reaction (PCR), which amplifies nucleic acids by using sequence specific primers targeted to opposing strands of double stranded DNA to copy a desired DNA sequence. Multiple cycles of primer annealing, DNA polymerization and double-stranded DNA denaturation are used to exponentially amplify a desired segment of DNA. Reactions with only one copy of template DNA can be rapidly and specifically amplified more than 100 million fold (see, e.g., U.S. Patent Nos. 4,683,195, 4,683,202 and 4,800,159).

Other methods for amplification of nucleic acids include reverse-transcriptase PCR (RT-PCR), nucleic acid sequence-based amplification (NASBA), transcription-based amplification system (TAS), self-sustained sequence replication (3SR), ligation amplification reaction (LAR), Q-beta amplification, and ligase chain reaction (LCR). Many of these amplification reactions utilize a polymerase enzyme or fragment thereof.

Details regarding the use of these and other amplification methods can be found in any of a variety of standard texts, including, e.g., Sambrook et al., Molecular Cloning--A Laboratory Manual (3rd Ed.), Vol. 1-3, Cold Spring Harbor Laboratory, Cold Spring Harbor, N.Y., 2000 ("Sambrook"); Current Protocols in Molecular Biology, F. M. Ausubel et al., eds., Current Protocols, a joint venture between Greene Publishing Associates, Inc. and John Wiley & Sons, Inc., (supplemented through 2002) ("Ausubel") and PCR Protocols A Guide to Methods and Applications (Innis et al. eds) Academic Press Inc. San Diego, Calif. (1990) (Innis). Many available biology texts have extended discussions regarding PCR and related amplification methods.

Analytical sensitivity is an important consideration when conducting quantitative PCR. Many methods exist for detecting amplified nucleic acid products. Some methods (see, e.g., U.S. Patent No. 4,683,195) utilize dot-blots, oligonucleotide arrays, size-separation by gel electrophoresis, Sanger sequencing, and various hybridization probes, and may require post-reaction processing.

A number of miniaturized approaches to performing PCR and other amplification reactions have been developed, e.g., involving amplification reactions in microfluidic devices, as well as methods for detecting and analyzing amplified nucleic acids in or on the devices. Details regarding such technology can be found in the technical and patent literature (e.g., U.S. Pat. No.6,444,461 to Knapp, et al. (Sep. 3, 2002) MICROFLUIDIC DEVICES AND METHODS FOR SEPARATION; U.S. Pat. No. 6,406,893 to Knapp, et al. (Jun. 18, 2002) MICROFLUIDIC METHODS FOR NON-THERMAL NUCLEIC ACID MANIPULATIONS; U.S. Pat. No. 6,391,622 to Knapp, et al. (May 21, 2002) CLOSED-LOOP BIOCHEMICAL ANALYZERS; U.S. Pat. No. 6,306,590 to Mehta, et al. (Oct. 23, 2001) Microfluidic matrix localization apparatus and methods; U.S. Pat. No. 6,303,343 to Kopf-Sill (Oct. 16, 2001) INEFFICIENT FAST PCR; U.S. Pat. No. 6,171,850 to Nagle, et al. (Jan. 9, 2001) INTEGRATED DEVICES AND SYSTEMS FOR PERFORMING TEMPERATURE CONTROLLED REACTIONS AND ANALYSES; U.S. Pat. No. 5,939,291 to Loewy, et al. (Aug. 17, 1999) MICROFLUIDIC METHOD FOR NUCLEIC ACID AMPLIFICATION; U.S. Pat. No. 5,955,029 to Wilding, et al. (Sep. 21, 1999) MESOSCALE POLYNUCLEOTIDE AMPLIFICATION DEVICE AND METHOD; U.S. Pat. No. 5,965,410 to Chow, et al. (Oct. 12, 1999) ELECTRICAL CURRENT FOR CONTROLLING FLUID PARAMETERS IN MICROCHANNELS, and many others).

Pal et al. (Lab on a Chip, 5: 1024-20132, 2005), describes an integrated microfluidic device capable of performing a variety of genetic assays.

Guolin et al. (Lab on a Chip, 10: 3103-3111, 2010), describes a self-contained all-in-one cartridge for sample preparation and real-time PCR in rapid influenza diagnosis.

WO 02/063288 discloses microfluidic devices having layered structures that provide a liquid handling interface with external devices.

US 2010/0261159 describes methods of making devices having a high-density array of through-holes for making high-density arrays.

US 2003/0152994 relates to devices for carrying out PCT reactions on a substrate having a sample-distribution network having (i) a sample inlet, (ii) one or more detection chambers, and (iii) channel means providing a dead-end fluid connection between each of the chambers and the inlet.

US 2010/0294811 relates to a device for delivering micro droplets into a reaction well for processing.

US 6,124,138 describes a device for quantitating analytes that includes a substrate which defines a sample-distribution network having (i) a sample inlet, (ii) one or more detection chambers, and (iii) channel means providing a dead-end fluid connection between each of the chambers and the inlet.

WO 2011/090396 relates to a microfluidic device for generating micro droplets.

Zhang et al. (Biotechnology Advances, 24: 243-284, 2006) is a review paper discussing PCR microfluidic devices for DNA amplification.

Peng et al. (Lab on a Chip, 11: 1041-1048, 2011) discloses an integrated microdevice and process for forensic short tandem repeat analysis.

US 2006/0062696 describes microfluidic devices and methods for manipulating fluidic materials in microfluidic devices that utilize differences between dispersion rates and/or average velocity of fluidic materials in order to manipulate them.

Despite the widespread use of amplification technologies and the adaptation of these technologies to miniaturized systems, certain technical difficulties persist in amplifying and detecting nucleic acids. Nucleic acid amplification methods, because of their ability to greatly amplify template nucleic acids, are prone to false positive results due to sample contamination, particularly contamination due to sample carryover. Some methods also require substantial sampling volume.

Thus, there remains a need for improved systems and methods for detecting and quantifying nucleic acids with increased sensitivity while minimizing contamination and sampling volume.

### SUMMARY OF THE INVENTION

The present invention discloses methods of processing samples for detecting nucleic acids by real-time, quantitative PCR as defined by the claims. A system for performing said methods is described herein. The system comprises a reaction card and a reaction vessel assembly. The reaction card comprises a plurality of channel networks (441, 442, 443, 541, 542, 543), a plurality of valves (414, 514), and a plurality of first micropumps (415, 515), all of which are disposed within the reaction card; a plurality of collection wells (416, 516) disposed on a surface of the reaction card; and a plurality of tubular members (411, 511) extending out from the reaction card The plurality of valves and the plurality of micropumps (415, 515) are operably connected within the plurality of channel networks (441, 442, 443, 541, 542, 543, and the plurality of collection wells (416, 516) and plurality of tubular members are in fluid communication with the channel network. The reaction vessel assembly comprises a plurality of reaction vessels (431, 531). The reaction vessel assembly is affixed to the reaction card such that the plurality of tubular members (411, 511) is inserted into the plurality of reaction vessels (431, 531).

The aforementioned and other features and advantages of the invention will become further apparent from the following detailed description of the presently preferred embodiments, read in conjunction with the accompanying drawings, which are not to scale. In the drawings, like reference numbers indicate identical or functionally similar elements. The detailed description and drawings are merely illustrative of the invention, rather than limiting, the scope of the invention being defined by the appended claims and equivalents thereof.

### BRIEF DESCRIPTION OF THE DRAWINGS

**FIG. 1** is a perspective view of a reaction card, a reagent tube assembly, and a reaction vessel assembly, in accordance with the present invention;
**FIG. 2** is a schematic illustration of a reagent tube assembly, in accordance with the present invention, showing top and side views of the assembly;
**FIG. 3** is a schematic illustration of a reagent tube assembly prior to being affixed to a reaction card in accordance with the present invention;
**FIG. 4** is a side, cutaway view of a system for processing samples, in accordance with the present invention;
**FIG. 5** is a side, cutaway view of another system for processing samples, in accordance with the present invention; and
**FIG. 6** is a side, cutaway view of yet another system for processing samples, in accordance with the present invention;

### DETAILED DESCRIPTION OF THE PRESENTLY PREFERRED EMBODIMENTS

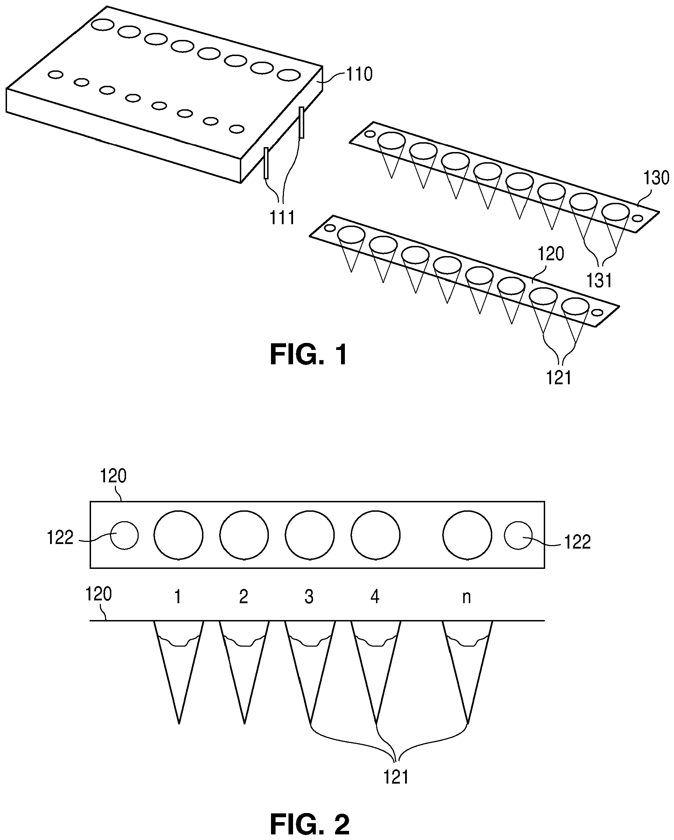

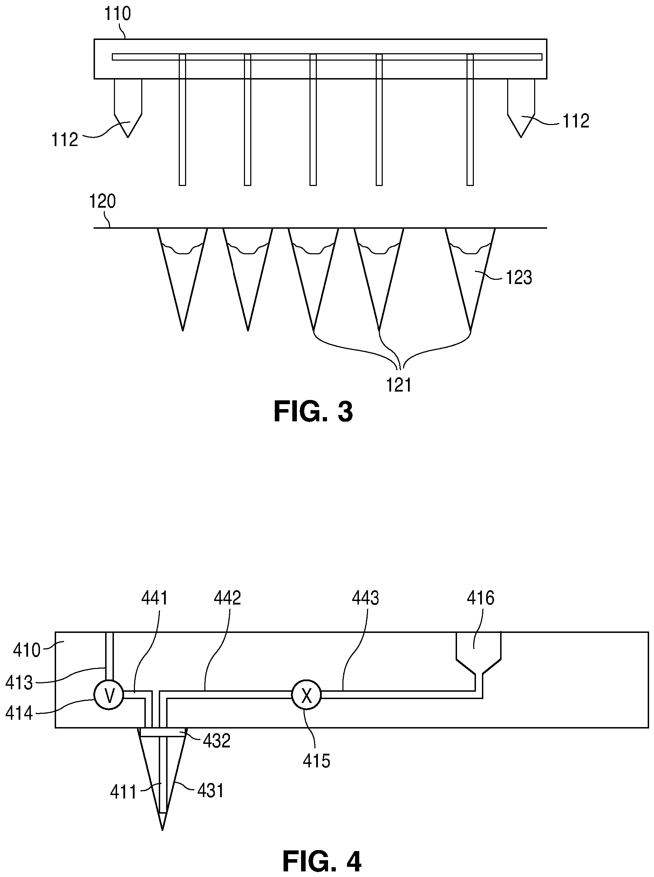

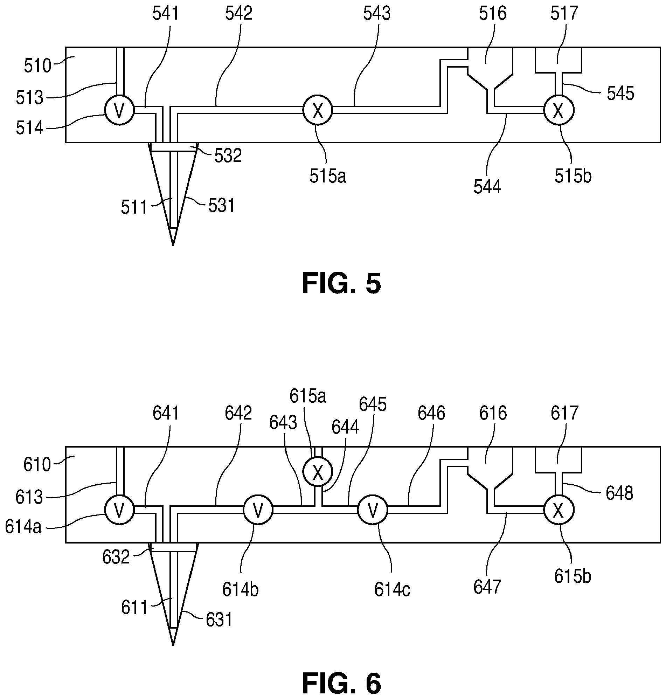

Described is a system for processing samples. The system comprises a reaction card and a reaction vessel assembly, seen at **110** and **130,** respectively, in **FIG. 1****.** The system may further comprise a reagent tube assembly, seen at **120** in **FIG. 1****.** Additional embodiments of the reaction card are illustrated at **410** in **FIG. 4****, 510** in **FIG. 5****,** and **610** in **FIG. 6****.** **FIGS. 4-6** illustrate reaction cards having a single channel network, but each reaction card may incorporate an array of channel networks, with one channel network being provided for each reaction vessel affixed to the reaction card.

As illustrated in **FIGS. 1** and **3****,** reaction card **110** includes a plurality of tubular members **111** extending out from the card. The number of tubular members may vary from one to n members, with a single tubular member being illustrated in each of **FIGS. 4-6** (at **411**, **511**, and **611**). The tubular member may be a flexible tube, a rigid tube, a capillary, a cannula, or another tubular member.

One embodiment of the reaction card, illustrated at **410** in **FIG. 4**, comprises a channel network (channels **441**, **442**, and **443**), a valve **414**, and a micropump **415**, all of which are disposed within the card. A collection well **416** is disposed on a surface of the card, and tubular member **411** can be seen extending out from the card. A vent **413** enables valve **414** to be opened to atmosphere. In all reaction card embodiments, the valve(s) and the micropump(s) are operably connected with the channel network, and the vent(s), tubular member(s), and collection well are in fluid communication with the channel network.

The number of valves, micropumps, channels, and vents included in a reaction card may vary. For example, the reaction card illustrated at **510** in **FIG. 5** includes not only a first micropump **515a**, but also a second micropump **515b**. Like the embodiment illustrated in **FIG. 4**, reaction card **510** includes a single tubular member **511**, a single vent **513**, and a single valve **514**. The channel network of reaction card **510** includes channels **541**, **542**, **543**, **544**, and **545**. Reaction card **510** also includes both a collection well **516** and a waste well **517.**

The reaction card illustrated at **610** in **FIG. 6** includes a single tubular member **611**; two vents **613a** and **613b**; three valves **614a**, **614b**, **614c**; and two micropumps **615a** and **615b**. Reaction card **610** also includes both a collection well **616** and a waste well **617**. Note that in all of the reaction card embodiments, channel lengths and collection well capacity are optimized so as to reduce volumes of materials and waste.

A reaction vessel assembly is affixed to the reaction card such that a tubular member is inserted into each reaction vessel. One embodiment of a reaction vessel assembly is illustrated at **130** in **FIG. 1**, and individual reaction vessels can be seen in **FIGS**. **1** and **4****-6** at **131**, **431**, **531**, and **631**, respectively. The reaction vessels are shown as conical but might also be round-bottomed or take other shapes. A reaction vessel assembly may include any number of reaction vessels, with a reaction vessel assembly being made up of a single reaction vessel or multiple vessels.

Where a reagent tube assembly is included in the system, the reagent tube assembly is also affixed to the reaction card such that a tubular member is inserted into each reaction vessel. As can be seen in **FIG. 1**, the reaction tube assembly and reagent tube assembly may have essentially the same shape. A reagent tube assembly, however, includes one or more reagents **123** disposed in each tube. The reagent(s) are for performing an amplification reaction such as a polymerase chain reaction (PCR) or other amplification method, including, but not limited to, reverse-transcriptase PCR (RT-PCR), nucleic acid sequence-based amplification (NASBA), transcription-based amplification system (TAS), self-sustained sequence replication (3SR), ligation amplification reaction (LAR), Q-beta amplification, and ligase chain reaction (LCR).

**FIG. 2** shows both a top view and a side view of a reagent tube assembly. **FIG. 3** shows reagent tube assembly **120** prior to being affixed to reaction card **110.** Note that, **FIGS. 2** and **3** may be seen as illustrating either a reagent tube assembly or a reaction vessel assembly, with reagent(s) **122** being absent from the reaction vessel assembly. A reagent tube or reaction vessel assembly may be configured as either a linear or a two-dimensional array, a linear array being illustrated in **FIGS. 1-3****.**

One or both of the reaction vessel assembly and the reagent tube assembly may be affixed to the reaction card using one or more mechanical locking mechanisms. One such mechanism is illustrated in **FIGS. 2** and **3** at **112** and **122.** Pegs **112** on reaction card **110** are inserted into openings **122** on either a reagent tube or reaction vessel assembly and are retained by friction. Pegs **112** may, of course, take other shapes and may be retained within openings **122** by means other than friction. The one or more locking mechanisms may be configured to prevent incorrect orientation of the reaction vessel or reagent tube assembly with respect to the reaction card when the assembly is affixed to the reaction card. For example, the openings may be positioned differently on each end of an assembly, with one hole positioned closer to an edge of the assembly than the other, as seen in **FIG. 1****.**

Both the reagent tube assembly and the reaction vessel assembly may further comprise a sealing means through which a tubular member extends when the assembly is affixed to the reaction card. Sealing means are shown, for example, in **FIGS. 4-6** at **432, 532,** and **632,** respectively. The sealing means may be pierced by a tubular member when the reagent tube assembly or the reaction vessel assembly is affixed to the reaction card, or the sealing means may include an opening through which the tubular member is inserted. A reagent tube assembly containing reagents may, for example, be sealed with an appropriate material to allow easy storage without the potential problems associated with leakage or evaporation. The seal may be thermally applied to maximize the effectiveness of the seal. Alternatively or additionally, sealing means **432, 532,** and **632** may be, for example, an O-ring and may be used as a sealing member in attaching the reagent tube or reaction vessel to the reaction card. A micropump contained within the reaction card can be used to extract the reagent(s) from a reagent tube through the tubular member inserted into the tube.

A system for processing samples may further comprise an analysis device, a detector in sensory communication with the analysis device, and a processor operably coupled to the reaction card and the analysis device. As used herein, the phrase "in sensory communication" refers to positioning of a detector such that it is operably connected to the analysis device, i.e., capable of receiving a detectable signal from the contents of the device. In the case of optical signals, this requires only that the detector be positioned to receive the optical signal. The analysis device may be configured to perform an electrophoretic separation. One such analysis device is, for example, a PerkinElmer LabChip GX® instrument. The processor may be, for example, a computer system either external to or incorporated into the analysis device. The computer system may additionally be used to display and store information gathered as a result of the operation of the analysis device.

The above systems can be used to process samples using PCR protocols for real-time PCR and/or end-point PCR (also commonly known as rtPCR or qPCR [quantitative PCR]). Further described is a method for processing samples. In the method, a reaction card is provided, the reaction card comprising a channel network, a valve, and a micropump, all of which are disposed within the card. The reaction card further comprises a collection well disposed on a surface of the card and a first tubular member extending out from the card. A reaction vessel is provided and affixed to the reaction card such that the tubular member is inserted into the reaction vessel. One or more amplification reaction reagents and a sample are delivered into the reaction vessel, and an amplification reaction is initiated within the reaction vessel, resulting in an amplification product being disposed within the reaction vessel. The valve is opened to atmosphere, and the micropump is activated to pump a first aliquot of reaction product from the reaction vessel into the tubular member, through the channel network, and into the collection well. Preferably the amplification reaction is not stopped during the steps of opening the valve to atmosphere and pumping the first aliquot of reaction product from the reaction vessel to the collection well.

The method may additionally include aspirating some or all of the first aliquot of reaction product from the collection well into an analysis device and analyzing the first aliquot of reaction product, the analysis preferably carried out using an electrophoretic separation method. Analyzing the first aliquot of reaction product may comprise quantitating nucleic acids within the first aliquot of reaction product.

The provided reaction card may further comprise a waste well and a second micropump, and the method may further comprise pumping any of the first aliquot of reaction product not aspirated into the analysis device out of the collection well and into the waste well using the second micropump.

The method may also include disposing a rinse solution in the collection well and pumping the rinse solution out of the collection well and into the waste well using the second micropump.

More than one aliquot of reaction product may be removed from the reaction vessel of the reaction card for analysis. Therefore, the method described above may further comprise closing the previously opened valve and deactivating the first and second micropumps prior to performing a second analysis. The method then comprises reopening the valve to atmosphere, reactivating the first micropump to pump a second aliquot of reaction product from the reaction vessel into the tubular member, through the channel network, and into the collection well; aspirating some or all of the second aliquot of reaction product from the collection well into the analysis device; and analyzing the second aliquot of reaction product. The amplification reaction is preferably not stopped until after the second aliquot of reaction product has been pumped into the collection well.

The method may be repeated multiple times to obtain and analyze as many aliquots of reaction product as are desired or as are contained within the reaction vessel. Preferably the amplification reaction is not stopped until all aliquots have been sampled. By analyzing multiple aliquots during the amplification reaction, real-time, quantitative PCR may be carried out.

When performing a PCR amplification reaction, a DNA sample is denatured at a relatively high temperature. The DNA is then annealed at a low temperature, and extension occurs at an intermediate temperature. Therefore, the steps of opening the valve and activating the micropump to pump an aliquot of reaction product into the collection well are preferably carried out during an annealing stage because pressure within the reaction vessel is reduced at the low annealing temperature. Opening the valve under reduced pressure diminishes the possibility of pushing reaction product out of the vent associated with the valve when opening the valve to atmospheric pressure. Reaction product located in the collection well may be analyzed throughout the remainder of the PCR cycle until the next sample is required. The annealing stage may be extended if desired to allow more time for withdrawal and analysis of the aliquot.

It is anticipated that there may not be a need to analyze a reaction product aliquot during each and every cycle. It may be adequate, for example, to analyze an aliquot after every second, third, or more cycles. This allows more time for analyzing each aliquot. It may, however, be necessary with low- or single-copy samples to perform a minimum number of cycles before taking a first aliquot from the reaction vessel in order to ensure that amplicons of the target material remain in the reaction vessel after the aliquot is removed.

### Example 1

The method of processing samples is carried out using the system of **FIG. 4** as follows. Reaction vessel **431** is affixed to reaction card **410** such that tubular member **411** is inserted into the reaction vessel. One or more amplification reaction reagents and a sample are delivered into reaction vessel **431**, and an amplification reaction is initiated within the vessel. Valve **414** is opened to vent to atmospheric pressure, and micropump **415** is used to pump an aliquot of reaction product from reaction vessel **431** into tubular member **411** and through channels **442** and **443** into collection well **416.** Some or all of the aliquot of reaction product may then be aspirated into an instrument such as a PerkinElmer LabChip® GX instrument and analyzed by the instrument. The reaction product may be analyzed by electrophoresis or another analysis method.

Micropump **415** is reversed to return any unused reaction product from collection well **416** into reaction vessel **431.** Valve **414** is then closed to seal reaction vessel **431.** The method may be repeated to analyze multiple aliquots of reaction product.

One limitation of the device illustrated in **FIG. 4** is the potential for cross-contamination unless a dedicated aspiration device is used to analyze each collection well when an array of collection wells is present on a reaction card. Therefore, the system of **FIG. 4** may be best suited to performing end-point PCR.

### Example 2

The method of processing samples is carried out using the system of **FIG. 5** as follows. Reaction vessel **531** is affixed to reaction card **510** such that tubular member **511** is inserted into the reaction vessel. One or more amplification reaction reagents and a sample are delivered into reaction vessel **531**, and an amplification reaction is initiated within the vessel. Valve **514** is opened to vent to atmospheric pressure, and micropump **515a** is used to pump an aliquot of reaction product from reaction vessel **531** into tubular member **511** and through channels **542** and **543** into collection well **516.** Because channel **543** is connected to collection well **516** near the top of the well, the well can be partially filled to below the level of channel **543**, and micropump **515a** can be reversed to return reaction product remaining within channels **542** and **543** to reaction vessel **530.** Valve **514** is then closed, and some or all of the reaction product within collection well **516** is aspirated from the well into an instrument such as a PerkinElmer LabChip® GX instrument and analyzed by the instrument. The reaction product may be analyzed by electrophoresis or another analysis method.

Collection well **516** is then emptied to waste well **517** using micropump **515b.** Alternatively, if carryover is not a concern, all unused reaction product may be returned to reaction vessel **530** rather than being pumped to waste well **517.**

With all valves closed and all micropumps stopped, a rinse solution may be delivered into collection well **516** to prepare the well for the next aliquot of reaction product. The rinse solution within collection well **516** is then pumped to waste well **517** using micropump **515b.** The method is repeated to analyze multiple aliquots. The system of **FIG. 5** may be used in performing either end-point PCR or real-time, quantitative PCR.

### Example 3

The method of processing samples is carried out using the system of **FIG. 6** as follows. Reaction vessel **631** is affixed to reaction card **610** such that tubular member **611** is inserted into the reaction vessel. One or more amplification reaction reagents and a sample are delivered into reaction vessel **631**, and an amplification reaction is initiated within the vessel. Valves **614a** and **614b** are opened to vent to atmospheric pressure, and micropump **615a** is used to pump an aliquot of reaction product from reaction vessel **631** into tubular member **611** and into channels **642, 643,** and **644.** It is not necessary to completely fill channel **644** because only a small amount of reaction product is needed for analysis.

Micropump **615a** is stopped, and valves **614a** and **614b** are closed. Valve **614c** is then opened and micropump **615a** is used to pump the reaction product within channels **642, 643,** and **644** through channels **645** and **646** into collection well **616.** Pumping stops before all of the reaction product has been pushed from channel **646** so that air is not pushed into the collection well where it might create bubbles.

Valve **614c** is then closed and micropump **615a** deactivated, and some or all of the reaction product within collection well **616** is aspirated from the well into an instrument such as a PerkinElmer LabChip® GX instrument and analyzed by the instrument. The reaction product may be analyzed by electrophoresis or another analysis method.

Valve **614c** remains closed while valves **614a** and **614b** are opened, and micropump **615a** is used to return reaction product remaining in channels **642** and **643** to reaction vessel **631.** All valves are then closed, and micropump **615a** is stopped. Air in the channels should not be pushed into the reaction vessel.

With all valves closed and micropump **615a** stopped, collection well **616** is then emptied to waste well **617** using micropump **615b.** Any reaction product remaining in channel **646** is also emptied to waste by opening valve **614c** and activating one or both of micropumps **615a** and **615b.**

With all valves closed and all micropumps stopped, a rinse solution may then be delivered into collection well **616** to prepare the well for the next aliquot of reaction product. The rinse solution within collection well **616** is then pumped to waste well **617** using micropump **615b.** The method is repeated to analyze multiple aliquots. The system of **FIG. 6** may be used in performing either end-point PCR or real-time, quantitative PCR.

While the embodiments of the invention disclosed herein are presently considered to be preferred, various changes and modifications can be made. The scope of the invention is defined in the appended claims.

## Claims

1. A method of processing samples for detecting nucleic acids by real-time, quantitative PCR, the method comprising:
providing a reaction card (410, 510), the reaction card comprising a plurality of channel networks (441, 442, 443, 541, 542, 543), a plurality of valves (414, 514), and a plurality of first micropumps (415, 515), all of which are disposed within the reaction card; a plurality of collection wells (416, 516) disposed on a surface of the reaction card; and a plurality of tubular members (411, 511) extending out from the reaction card;
operably connecting the plurality of valves and the plurality of micropumps (415, 515) within the plurality of channel networks (441, 442, 443, 541, 542, 543);
providing a plurality of reaction vessels (431, 531);
affixing the plurality of reaction vessels (431, 531) to the reaction card (410, 510) such that the plurality of tubular members (411, 511) are inserted into the plurality of reaction vessels;
delivering one or more amplification reaction reagents and a sample comprising nucleic acids into the plurality of the reaction vessels (431, 531);
initiating an amplification reaction within the plurality of reaction vessels (431, 531), resulting in an amplification product of the nucleic acids being disposed within the plurality of reaction vessels;
opening the plurality of valves (414, 514) to atmosphere;
activating the plurality of first micropumps (415, 515) to pump a first aliquot of reaction product from the plurality of reaction vessels (431, 531) into the plurality of tubular members (411, 511), through the plurality of channel networks (441, 442, 443, 541, 542, 543), and into the plurality of collection wells (416, 516);
aspirating some or all of the first aliquot of reaction product from the plurality of collection wells (416, 516) into an analysis device; and
analyzing the first aliquot of reaction product, wherein analyzing the first aliquot of reaction product comprises quantitating nucleic acids within the first aliquot of reaction product;
disposing a rinse solution in the plurality of collection wells; and
pumping the rinse solution out of the plurality of collection wells and into the waste well using the second micropump;
continuing the amplification reaction within the plurality of reaction vessels (431, 531) to obtain a second aliquot of reaction product;
closing the plurality of valves (414, 514) to seal the plurality of reaction vessels (431, 531);
deactivating the plurality of first and second micropumps (415, 515);
reopening the plurality of valves (414, 514) to atmosphere;
reactivating the plurality of first micropumps (415, 515) to pump a second aliquot of reaction product from the plurality of reaction vessels into the plurality tubular members, through the channel network (441, 442, 443, 541, 542, 543), and into the plurality of collection wells (416, 516);
aspirating some or all of the second aliquot of reaction product from the plurality of collection wells (416, 516) into the analysis device; and
analyzing the second aliquot of reaction product, wherein analyzing the second aliquot of reaction product comprises quantitating nucleic acids within the second aliquot of reaction product;
wherein the amplification reaction is not stopped until after the second aliquot of reaction product has been pumped into the plurality of collection wells (416, 516).

2. The method of claim 1, wherein the first aliquot of reaction product is analyzed using an electrophoretic separation method.

3. The method of claim 1, wherein the opening and activating steps are carried out during a polymerase chain reaction annealing stage.

4. The method of claim 1, wherein the second aliquot of reaction product is analyzed using an electrophoretic separation method.

## Patentansprüche

1. Verfahren zur Verarbeitung von Proben zum Nachweisen von Nucleinsäuren mittels quantitativer Echtzeit-PCR, wobei das Verfahren Folgendes umfasst:
das Bereitstellen einer Reaktionsplatte (410, 510), wobei die Reaktionsplatte Folgendes umfasst: eine Vielzahl von Kanalnetzen (441, 442, 443, 541, 542, 543), eine Vielzahl von Ventilen (414, 514) und eine Vielzahl erster Mikropumpen (415, 515), von denen alle im Inneren der Reaktionsplatte angeordnet sind; eine Vielzahl von Sammelvertiefungen (416, 516), die auf einer Oberfläche der Reaktionsplatte angeordnet sind; und eine Vielzahl von rohrförmigen Elementen (411, 511), die von der Reaktionsplatte vorstehen;
das Wirkverbinden der Vielzahl von Ventilen und der Vielzahl von Mikropumpen (415, 515) im Inneren der Vielzahl von Kanalnetzen (441, 442, 443, 541, 542, 543);
das Bereitstellen einer Vielzahl von Reaktionsgefäßen (431, 531);
das Befestigen der Vielzahl von Reaktionsgefäßen (431, 531) an der Reaktionsplatte (410, 510), so dass die Vielzahl von rohrförmigen Elementen (411, 511) in die Vielzahl von Reaktionsgefäßen eingeführt wird;
das Abgeben einer oder mehrerer Amplifikationsreaktionsreagenzien und eine Probe, die Nucleinsäure umfasst, in die Vielzahl von Reaktionsgefäßen (431, 531);
das Einleiten einer Amplifikationsreaktion im Inneren der Vielzahl von Reaktionsgefäßen (431, 531), was zu einem Amplifikationsprodukt der Nucleinsäuren führt, die im Inneren der Vielzahl von Reaktionsgefäßen angeordnet sind;
das Öffnen der Vielzahl von Ventilen (414, 514) gegenüber der Umgebung;
das Aktivieren der Vielzahl erster Mikropumpen (414, 515), um eine erste Aliquote Reaktionsprodukt aus der Vielzahl von Reaktionsgefäßen (431, 531) in die Vielzahl von rohrförmigen Elementen (411, 511), durch die Vielzahl von Kanalnetzen (441, 442, 443, 541, 542, 543) und in die Vielzahl von Sammelvertiefungen (416, 516) zu pumpen;
das Ansaugen eines Teils von oder der gesamten ersten Aliquote Reaktionsprodukt aus der Vielzahl von Sammelvertiefungen (416, 516) in eine Analysevorrichtung; und
das Analysieren der ersten Aliquote Reaktionsprodukt, wobei das Analysieren der ersten Aliquote Reaktionsprodukt das Quantifizieren von Nucleinsäuren in der ersten Aliquote Reaktionsprodukt umfasst;
das Abgeben einer Spüllösung in die Vielzahl von Sammelvertiefungen; und
das Pumpen der Spüllösung aus der Vielzahl von Sammelvertiefungen und in die Abfallvertiefung unter Verwendung der zweiten Mikropumpe;
d as Fortsetzen der Amplifikationsreaktion im Inneren der Vielzahl von Reaktionsgefäßen (431, 531), um eine zweite Aliquote Reaktionsprodukt zu erhalten;
das Schließen der Vielzahl von Ventilen (414, 514), um die Vielzahl von Reaktionsgefäßen (431, 531) abzudichten;
das Deaktivieren der Vielzahl erster und zweiter Mikropumpen (415, 515);
das erneute Öffnen der Vielzahl von Ventilen (414, 514) gegenüber der Umgebung;
das Reaktivieren der Vielzahl erster Mikropumpen (415, 515), um eine zweite Aliquote Reaktionsprodukt aus der Vielzahl von Reaktionsgefäßen in die Vielzahl von rohrförmigen Elementen, durch die Vielzahl von Kanalnetzen (441, 442, 443, 541, 542, 543) und in die Vielzahl von Sammelvertiefungen (416, 516) zu pumpen;
das Ansaugen eines Teils von oder der gesamten zweiten Aliquote Reaktionsprodukt aus der Vielzahl von Sammelvertiefungen (416, 516) in die Analysevorrichtung; und
das Analysieren der zweiten Aliquote Reaktionsprodukt, wobei das Analysieren der zweiten Aliquote Reaktionsprodukt das Quantifizieren von Nucleinsäuren in der zweiten Aliquote Reaktionsprodukt umfasst;
wobei die Amplifikationsreaktion nicht gestoppt wird, bis die zweite Aliquote Reaktionsprodukt in die Vielzahl von Sammelvertiefungen (416, 516) gepumpt wurde.

2. Verfahren nach Anspruch 1, wobei die erste Aliquote Reaktionsprodukt unter Verwendung eines elektrophoretischen Trennverfahrens analysiert wird.

3. Verfahren nach Anspruch 1, wobei die Öffnungs- und Aktivierungsschritte während der Anellierungsphase einer Polymerasekettenreaktion durchgeführt werden.

4. Verfahren nach Anspruch 1, wobei die zweite Aliquote Reaktionsprodukt unter Verwendung eines elektrophoretischen Trennverfahrens analysiert wird.

## Revendications

1. Procédé de traitement d'échantillons pour détecter des acides nucléiques par PCR quantitative en temps réel, le procédé comprenant :
la fourniture d'une carte de réaction (410, 510), la carte de réaction comprenant une pluralité de réseaux de canaux (441, 442, 443, 541, 542, 543), une pluralité de vannes (414, 514), et une pluralité de premières micropompes (415, 515), l'ensemble de ceux-ci étant disposés dans la carte de réaction ; une pluralité de puits de collecte (416, 516) disposés sur une surface de la carte de réaction ; et une pluralité d'éléments tubulaires (411, 511) s'étendant depuis la carte de réaction ;
le raccordement fonctionnel de la pluralité de vannes et la pluralité de micropompes (415, 515) dans la pluralité de réseaux de canaux (441, 442, 443, 541, 542, 543) ;
la fourniture d'une pluralité de cuves de réaction (431, 531) ;
la fixation de la pluralité de cuves de réaction (431, 531) à la carte de réaction (410, 510) de sorte que la pluralité d'éléments tubulaires (411, 511) sont insérés dans la pluralité de cuves de réaction ;
la distribution d'un ou plusieurs réactifs de réaction d'amplification et d'un échantillon comprenant des acides nucléiques dans la pluralité de cuves de réaction (431, 531) ;
l'amorçage d'une réaction d'amplification dans la pluralité de cuves de réaction (431, 531), conduisant à un produit d'amplification des acides nucléiques étant disposés dans la pluralité de cuves de réaction ;
l'ouverture de la pluralité de vannes (414, 514) à l'atmosphère ;
l'activation de la pluralité de premières micropompes (415, 515) pour pomper une première aliquote de produit de réaction depuis la pluralité de cuves de réaction (431, 531) dans la pluralité d'éléments tubulaires (411, 511), par l'intermédiaire de la pluralité de réseaux de canaux (441, 442, 443, 541, 542, 543), et dans la pluralité de puits de collecte (416, 516) ;
l'aspiration d'une partie ou de la totalité de la première aliquote de produit de réaction depuis la pluralité de puits de collecte (416, 516) dans un dispositif d'analyse ; et
l'analyse de la première aliquote de produit de réaction, où l'analyse de la première aliquote de produit de réaction comprend la quantification d'acides nucléiques dans la première aliquote de produit de réaction ;
la disposition d'une solution de rinçage dans la pluralité de puits de collecte ; et
le pompage de la solution de rinçage hors de la pluralité de puits de collecte et dans le puits de déchets au moyen de la deuxième micropompe ;
la poursuite de la réaction d'amplification dans la pluralité de cuves de réaction (431, 531) pour obtenir une deuxième aliquote de produit de réaction ;
la fermeture de la pluralité de vannes (414, 514) pour sceller la pluralité de cuves de réaction (431, 531) ;
la désactivation de la pluralité de premières et deuxièmes micropompes (415, 515) ;
la réouverture de la pluralité de vannes (414, 514) à l'atmosphère ;
la réactivation de la pluralité de premières micropompes (415, 515) pour pomper une deuxième aliquote de produit de réaction depuis la pluralité de cuves de réaction dans la pluralité d'éléments tubulaires, par l'intermédiaire du réseau de canaux (441, 442, 443, 541, 542, 543), et dans la pluralité de puits de collecte (416, 516) ;
l'aspiration d'une partie ou de la totalité de la deuxième aliquote de produit de réaction depuis la pluralité de puits de collecte (416, 516) dans le dispositif d'analyse ; et
l'analyse de la deuxième aliquote de produit de réaction, où l'analyse de la deuxième aliquote de produit de réaction comprend la quantification des acides nucléiques dans la deuxième aliquote de produit de réaction ;
dans lequel la réaction d'amplification n'est pas arrêtée avant que la deuxième aliquote de produit de réaction ait été pompée dans la pluralité de puits de collecte (416, 516).

2. Procédé selon la revendication 1, dans lequel la première aliquote de produit de réaction est analysée au moyen d'un procédé de séparation électrophorétique.

3. Procédé selon la revendication 1, dans lequel les étapes d'ouverture et d'activation sont conduites pendant une étape d'hybridation par réaction de polymérase en chaîne.

4. Procédé selon la revendication 1, dans lequel la deuxième aliquote de produit de réaction est analysée au moyen d'un procédé de séparation électrophorétique.
